# EUROPEAN PATENT SPECIFICATION

(11) **EP 3 162 480 B1**
(45) Date of publication and mention of the grant of the patent: **08.06.2022**
(21) Application number: 16191708.3
(22) Date of filing: 30.09.2016
(51) Int. Cl.: B27G 15/00

(54) **HOLESAW AND PILOT BIT WITH THREADED TIP**
LOCHSÄGE UND ZENTRIERBOHRER MIT GEWINDESPITZE
SCIE-CLOCHE ET FORET DE CENTRAGE AVEC BOUT FILETÉ

(30) Priority: 29.10.2015 US 201562247816 P
(43) Date of publication of application: 03.05.2017
(73) Proprietor: Black & Decker Inc., New Britain, CT 06053 (US)
(72) Inventor: Lourenco, Marco, Baltimore, MD Maryland 21230 (US); Johnson, David N, Doncaster, South Yorkshire DN5 7EX (GB); Niblett, James R., Columbia, MD Maryland 21044 (US)
(74) Representative: SBD IPAdmin

(56) References cited:
- GB-A- 104 800
- KR-U- 20150 001 446
- US-A- 1 449 790
- US-A- 2 345 403
- US-A- 5 221 166
- US-A1- 2003 226 694
- US-A1- 2012 155 979

## Description

### TECHNICAL FIELD

This application relates to a holesaw assembly according to the preamble of claim 1. Such a holesaw assembly is known from KR 2015 0001446 U.

### BACKGROUND

Two types of power tool accessories for cutting larger diameter holes in a workpiece are holesaws and self-feed drill bits. A holesaw generally includes a cup shaped cutting member formed from a flat blade with teeth that is rolled and welded into a cylindrical shape, and then welded to a round base. The holesaw may be mounted to an arbor to couple the holesaw to a rotary power tool such as a drill. A center pilot drill bit may also be received in the holesaw and/or the arbor to help drill a pilot hole to center the holesaw in a workpiece. In use, arbor, holesaw, and pilot bit are assembled and coupled to a rotary power tool such as a drill. The drill is then actuated so that the pilot drill bit enters the workpiece, followed by the holesaw. The holesaw forms a large diameter hole in the workpiece by removing a solid cylindrical plug from the workpiece. Such holesaws are well known. An exemplary holesaw can be found in U.S. Patent No. 1,449,790. This reference discloses a disk shaped member adapted to be rotated by any suitable means, and wherein said member including clamping means for attaching a circular band saw. A more modern example of a holesaw is the Milwaukee^{®} 49-56-9130 2-9/16" Big Hawg^{®} Hole Cutter with Spade Pilot Bit, sold by Milwaukee Electric Tool Corp. of Brookfield, Wisconsin.

A self-feed drill bit generally includes a shank for coupling to a rotary power tool and an integral cutting head coupled to the shank. The cutting head has a semicircular base, a semi-cylindrical wall coupled to the base having a plurality of teeth, and one or more radial cutters or blades extending from a center of the cutting head to the semi-cylindrical wall. The cutting head may be provided with a pilot bit, which may include a self-feeding threaded tip. In use, the shank is coupled to a rotary power tool such as a drill. The drill is then actuated so that the pilot bit enters the workpiece, followed by the cutting head. The cutting head forms a large diameter in the hole in the workpiece by removing tiny chips from the workpiece. An example of a self-feed drill bit is a DeWALT DW1639 2 9/16" Self-Feed Bit sold by DeWALT Industrial Tool Co. of Towson, Maryland.

Holesaws are often preferred over self-feed bits for several reasons. First, holesaws are much less messy because they form a solid-plug of waste material, while self-feed bits throw small chips over a wide area around a hole. This can be important when working in an area where debris is not desired. Second, holesaws are much less expensive than self-feed bits. This is because a self-feed bit is made by solid investment casting, while a holesaw is made by bending and welding sheet metal. For example, the Milwaukee^{®} 49-56-9130 2-9/16" Big Hawg^{®} Hole Cutter with Spade Pilot Bit currently retails for almost double the price of the DeWALT DW1639 2 9/16" Self-Feed Bit. Third, self-feed bits are generally have a maximum diameter of about 10 centimeters, while holesaws may have a maximum diameter of 15 centimeters or more. Finally, self-feed bits generally require a large, high powered corded drill, while holesaws can be used with smaller, lower powered cordless drills.

Some drawbacks of holesaws include that a holesaw may be more difficult to use because it requires the user to put a large amount of axial bias on the tool to drive the holesaw through the workpiece. In addition, when used with a cordless power tool such as a cordless drill existing holesaws also have poor runtime performance (i.e., the number of holes that can be drilled on a single battery charge). Further, it can be difficult to remove a plug of waste material from the holesaw. There is a need for a holesaw that overcomes these deficiencies.

### SUMMARY

To overcome the above deficiencies the present invention provides a holesaw assembly according to claim 1. Preferred embodiments are defined as per the dependent claims.

The holesaw assembly according to the present invention enables substantially greater runtime than existing holesaws when used with a cordless (battery operated) power tool. In addition, the holesaw assembly is usable with the user having to place little or no axial bias on the power tool, thus reducing user fatigue. These and other advantages and features will be apparent from the description and the drawings.

### BRIEF DESCRIPTION OF THE DRAWINGS

FIG. 1 is a perspective view of a first embodiment of a holesaw assembly.
FIG. 2A is an exploded perspective view of the holesaw assembly of FIG. 1.
FIG. 2B is a side view of the holesaw assembly of FIG. 1 with the collar on the arbor retracted.
FIG. 3A is a perspective view of a holesaw of the holesaw assembly of FIG. 1.
FIGS. 3B and 3C are close up perspective views of two alternative embodiments of a cutting tooth for the holesaw of FIG. 3A.
FIG. 3D is a front view along line 3D-3D of the two embodiments of a cutting tooth in FIGS. 3B and 3C.
FIG. 3E is a top view along line 3E-3E of the two embodiments of a cutting tooth in FIGS. 3B and 3C.
FIG. 4A is a front view of a first embodiment of a pilot bit for use with the holesaw assembly of FIG. 1.
FIG. 4B is a perspective view of the pilot bit of FIG. 4A.
FIG. 4C is a close up side view of the pilot bit of FIG. 4A assembled with the holesaw of FIG. 1.
FIG. 4D is a close up side view of a cutting head of a second embodiment of a pilot bit for use with the holesaw assembly of FIG. 1.
FIG. 4E is a close up side view of a cutting head of a third embodiment of a pilot bit for use with the holesaw assembly of FIG. 1.
FIG. 4F is a front end view of the pilot bit of FIG. 4E.
FIG. 4G is a side view of the pilot bit of FIG. 4E assembled with the holesaw and arbor of the holesaw assembly of FIG. 1.
FIG. 5A is a side view of a second embodiment of a holesaw assembly.
FIG. 5B is a side view of a pilot bit of the holesaw assembly of FIG. 5A.
FIG. 6 is a perspective view of a third embodiment of a holesaw assembly.
FIG. 7 is a perspective view of a fourth embodiment of a holesaw assembly.

### DETAILED DESCRIPTION

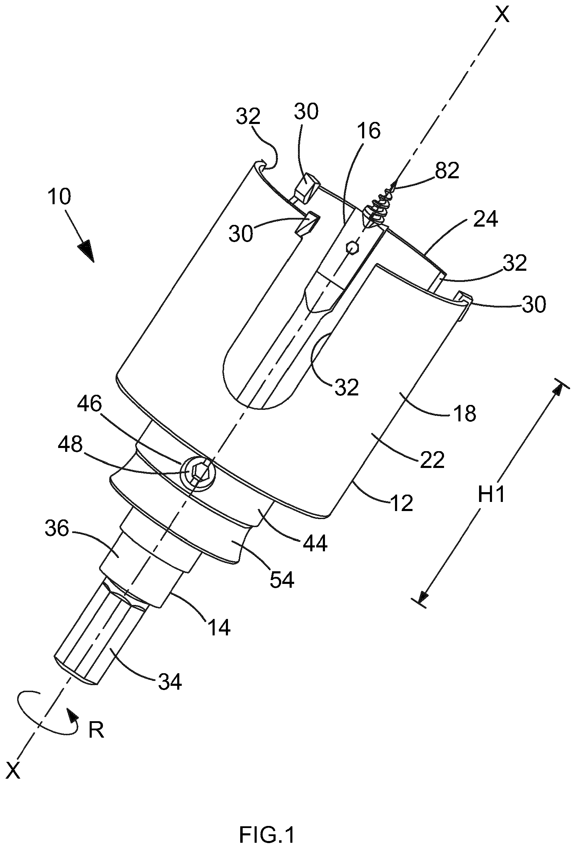

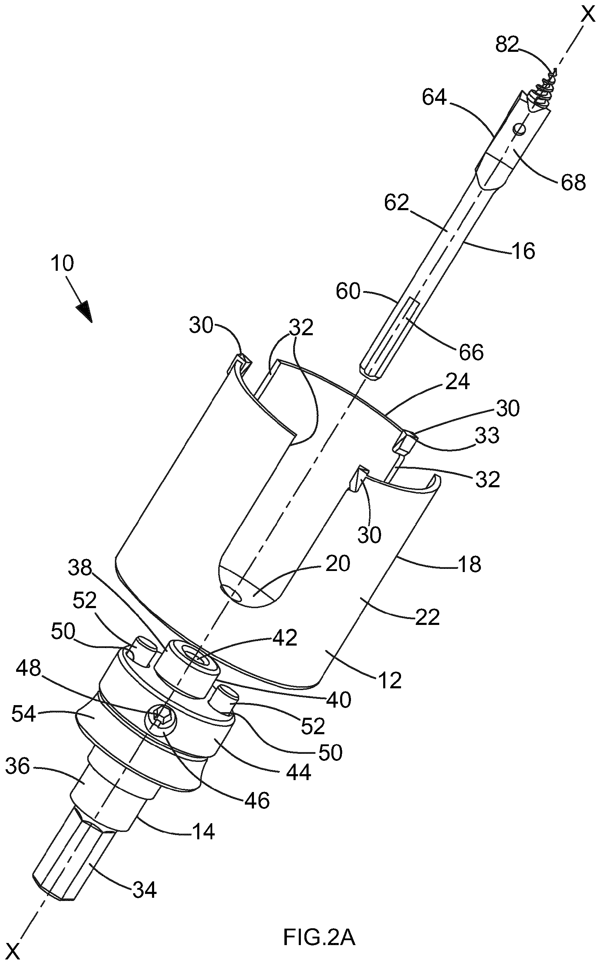

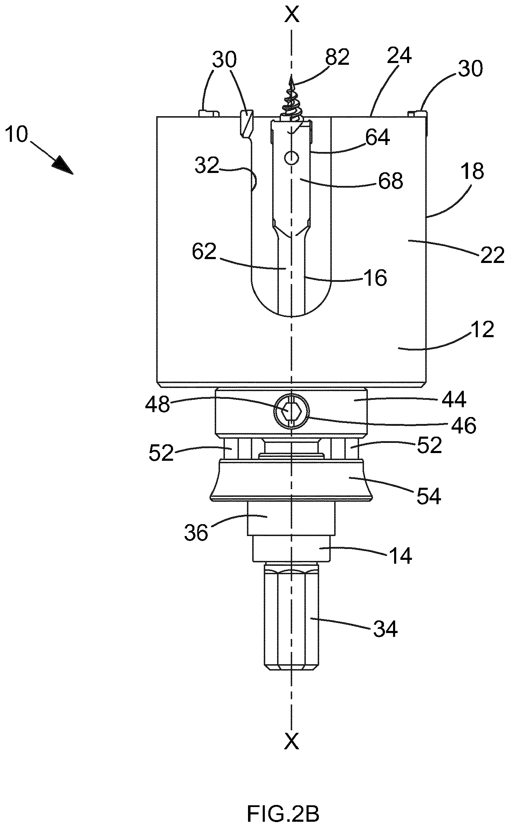

Referring to FIGS. 1, 2A and 2B, in one embodiment, a holesaw assembly 10 includes a holesaw 12, an arbor 14 to which the holesaw 12 is removably mounted, and a pilot bit 16 with a threaded tip 82 received in the holesaw 12 and removably coupled to the arbor 14.

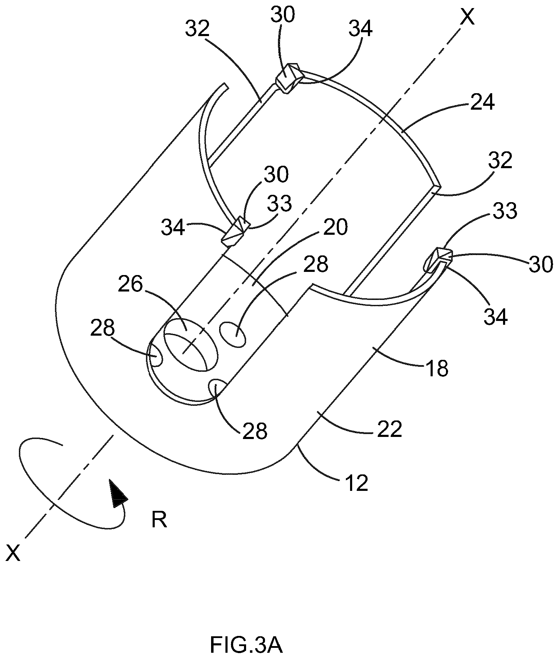

Referring also to FIG. 3A, an embodiment of the holesaw includes a hollow cup 18 defining a center axis X. The cup 18 has a round (generally circular) base 20 substantially perpendicular to the center axis X and a generally cylindrical peripheral wall 22 coupled to and extending axially forward of the base 20 to a peripheral edge 24 at a free end of the wall. The base 20 defines a central opening 26 and a plurality of peripheral apertures 28 spaced radially outward from the central opening 26. The holesaw 12 may be provided in a variety of different diameters corresponding to various sizes of holes to be cut, e.g., ranging from approximately 2 centimeters to approximately 15 centimeters.

The peripheral wall 22 defines one or more slots 32 configured to facilitate removal of a plug of material from the holesaw 12. In the illustrated embodiment, the slots 32 are open to the edge 24 and are generally parallel to the center axis X. However, the slots 32 may be fully enclosed, may be at an angle to the center axis X, and/or may have a different curved or geometric shape. The peripheral edge 24 includes one or more cutting inserts 30. The cutting inserts 30 are composed of a hard metal, such as tungsten carbide, and may be received in and brazed or welded to pockets 34 in the peripheral edge 24. In the illustrated embodiment, each of the slots 32 is positioned in front of one of the cutting inserts 30 in a cutting direction of rotation R of the holesaw 18.

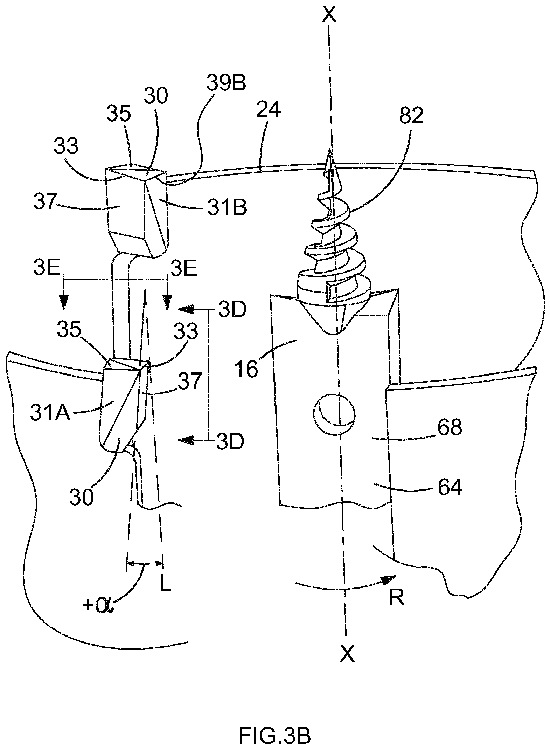

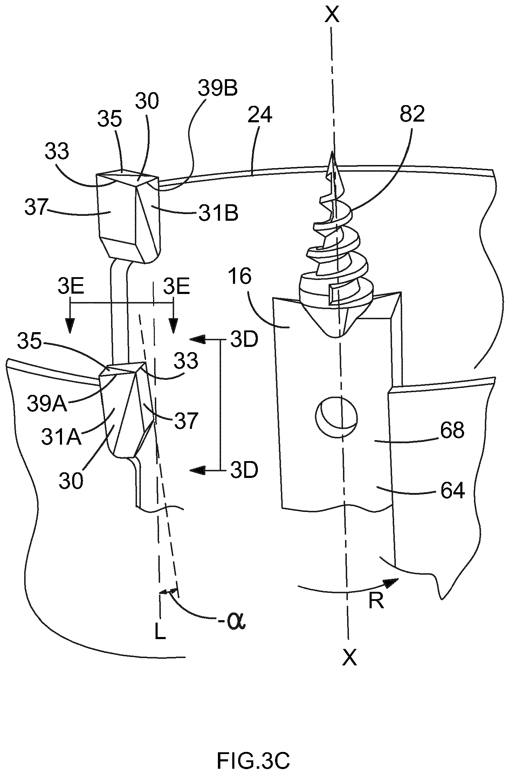

Referring also to FIGS. 3B and 3C, each cutting insert 30 has a prismatic or three-dimensional polygonal body 31 including a cutting edge 33, a rake face 37 extending generally axially downward from the cutting edge 31, a top relief face 35 extending rotationally rearward of the cutting edge 33. The body 31 also has an outer side face 31A and an inner side face 31B extending generally axially downward from the relief face 35. The outer side face 31A intersects relief face 35 at an outer top edge 39A and the inner side face 31B intersects the relief face 35 at an inner top edge 39B. The rake face 37 lies in a plane that is at a hook angle α to a line L that is generally parallel to the center axis X. The hook angle α is said to be negative when the rake face 37 and cutting edge 33 are inclined away from the rotational direction R (as shown in FIG. 3C), is said to be positive when the rake face 37 and cutting edge 33 are inclined toward the rotational direction R (as shown in FIG. 3B), and is said to be zero when the rake face 37 is substantially parallel to the line L. The hook angle α is between approximately -10° (e.g., as shown in FIG. 3C) and approximately +10° (e.g., as shown in FIG. 3B). The hook angles improve cordless runtime, as discussed in more detail below.

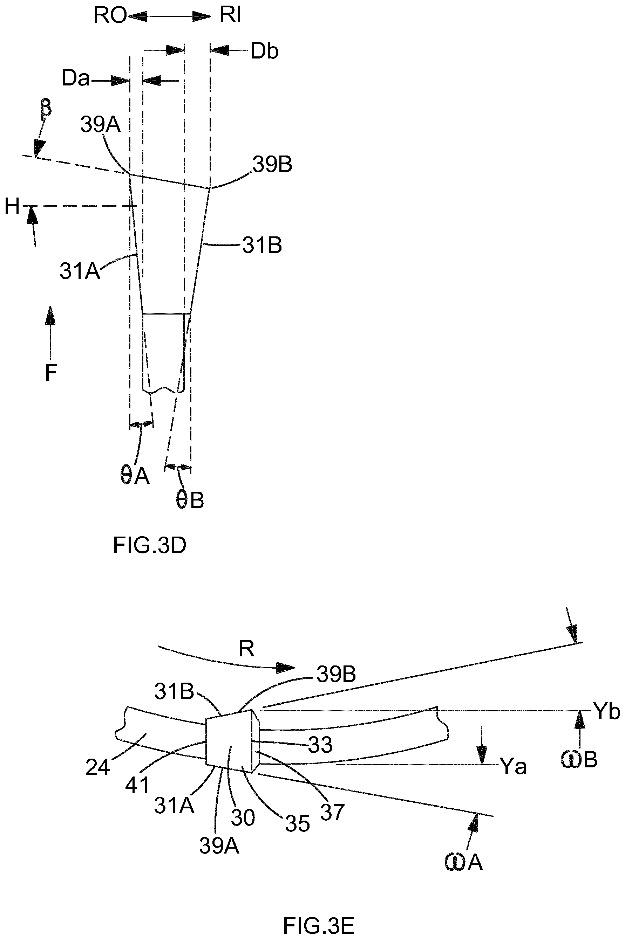

Referring also to FIG. 3D, when viewed in a circumferential direction opposite to the direction of rotation R (as indicated by arrow 3D-3D in FIGS. 3B and 3C), the top relief face 35 is bevelled axially downward in a radially inward direction RI from the outer top edge 39A to the inner top edge 39B at a top bevel angle β relative to horizontal H. The top bevel angle improves cordless runtime as discussed in more detail below.

The outer side surface 31A is angled radially outward in an axially forward direction F by an outer offset angle θA so that the outer top edge 39A is offset in a radially outward direction RO from the peripheral edge 24 of the holesaw by an outer offset distance Da. The inner side surface 31A is angled radially inward in an axially forward direction F by an inner offset angle θB so that the inner top edge 39B is offset in a radially inward direction RI from the peripheral edge 24 of the holesaw by an inner offset distance Db. The inner offset distance Db and the inner offset angle θB are greater than the outer offset distance Da and the outer offset angle θA. In one implementation, the top bevel angle β is approximately 5° to 15° (e.g., approximately 10°), the outer offset angle θA is approximately 2° to 8° (e.g., approximately 5°), the inner offset angle θB is approximately 5° to 11° (e.g., approximately 8°), the outer offset distance Da is approximately 0.4 mm to 0.8 mm (e.g., approximately 0.6 mm), and the inner offset distance Db is approximately 1.0 mm to 1.4 mm (e.g., approximately 1.2 mm). The larger offset angle θB and offset distance Da of the inner side surface 32B creates a space between the plug formed by the cutting inserts and the rim of the holesaw, which facilitates easier removal of the plug from the holesaw after a cutting operation is complete.

Referring also to FIG. 3E, when viewed from an axially forward end of the holesaw (as indicated by arrow 3E-3E in FIGS. 3B and 3C), the outer side surface 31A and the inner side surface 31B taper inwardly toward each other from the rake face 37 toward a trailing face 41 by angles ωA and ωB, respectively, relative to respective lines Ya and Yb perpendicular to the cutting edge 33. The outer taper angle ωA may be greater than the inner taper angle ωB. In one implementation, the outer taper angle ωA may be approximately 9° to 13° (e.g., approximately 11°) and the inner taper angle ωB may be approximately 8° to 12° (e.g., approximately 10°). The taper angles improve cordless runtime and plug removal discussed in more detail below.

The holesaw 18 may be manufactured using the following process. First, a sheet metal blank 90 may be stamped or cut to form a rectangular blade portion 92 having the peripheral edge 24, a bottom edge 94, and lateral edges 95, 96. Next, the rectangular blade portion 92 may be rolled into a cylindrical shape and its lateral edges 95, 96 welded together along a seam 98 to form the peripheral wall 22. A similar sheet metal blank 90 may be stamped or cut to form the circular base 20 with the openings 26, 28. The bottom edge 94 of the peripheral wall 22 may then welded to the base 20. The cutting inserts 30 then may be brazed or welded to the pockets in the peripheral edge 24. Finally, the cutting inserts 30 may be ground to their desired geometry. These steps may be performed in a different order. For example, the cutting inserts may be ground to their desired geometry before they are brazed or welded to the pockets in the peripheral edge 24.

Referring again to FIGS. 1, 2A and 2B, the arbor 14 includes a round or polygonal shaped shank 34 extending along the center axis X and configured to be received in a tool holder or chuck of a rotary power tool such as a drill (not shown). Coupled to a front end of the shank 34 is an intermediate shaft 36, and coupled to the opposite end of the intermediate shaft 36 is a front end 38 with a central projection 40. The central projection 40 is configured to be received in the central opening 26 of the holesaw 12. The central projection 40 may be externally threaded and the center opening 26 may be internally threaded to facilitate their secure attachment to one another. The central projection 40 also defines a central bore 42 configured to receive the pilot bit 16. Rigidly coupled to the central projection 40 is a cylindrical flange 44. The cylindrical flange 44 defines a radial bore 46 in communication with the central bore 44. The radial bore 46 receives a set screw 48 that can be adjusted to retain or release the pilot bit 16 in or from the central bore 44.

The cylindrical flange 44 also defines a pair of axial bores 50 disposed radially outward from the central projection 40. Axially behind the cylindrical flange 44 and surrounding the intermediate shaft 36 is an annular collar 54 with a pair of projections 52 generally parallel to the center axis X and received in and project from the axial bores 50 in the flange 44. The projections 52 are configured to be received in the peripheral openings 28 in the holesaw 12. The annular collar 54 is moveable along the intermediate shaft 36 between a front position (as shown in FIGS. 1 and 2A) in which the collar 54 abuts the cylindrical flange 44 and the projections 52 protrude from the axial bores 50, and a retracted position (as shown in FIG. 2B) in which the collar 54 is retracted rearward of the cylindrical flange 44 so that the projections 52 are retracted into the axial bores 50. Retracting the collar 54 allows the holesaw 12 to be easily removed from or mounted to the arbor 14. In other embodiments, an arbor may be integral with the holesaw, or may include a quick release mechanism to facilitate removal of the holesaw from the arbor.

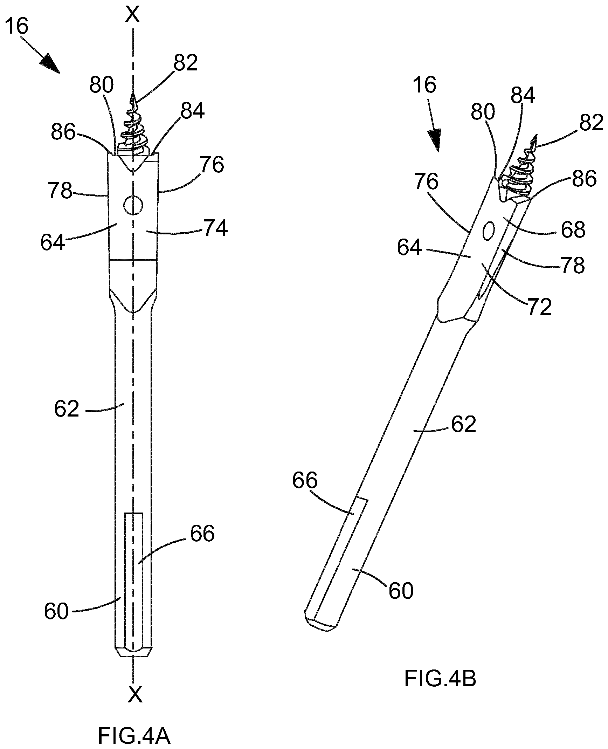

Referring to FIGS. 2A and 4A-4C, in one embodiment, the pilot bit 16, in the form of a spade bit, includes a shank 60, an intermediate shaft 62, and a cutting head 64 extending along the center axis X. The shank 60 is generally cylindrical with one or more flats 66. The shank 60 is receivable in the central opening 26 of the holesaw 12 and is removably mountable in the central bore 44 in the arbor 14 using the set screw 48. The intermediate shaft 62 is generally cylindrical. The cutting head 64 includes a plate-like body 68 having opposed side faces 72, 74 bounded by opposed side edges 76, 78 and by a top edge 80. The plate like body 68 may have a width W of approximately 7 mm to approximately 13 mm.

Extending axially forward of the top edge 80 along the center axis X is an at least partially threaded tip 82. The tip 82 may have a generally conical, frustroconical, or parabolic shape extending from a wide base 81 to a narrower or pointed tip 83. The tip 82 may have a diameter D at its base 81 of approximately 3 mm to approximately 7 mm, and a height H of approximately 6 mm to approximately 20 mm. One or more threads 85 wrap around the tip in the rotational direction. The threads 85 on the tip 82 may have a thread pitch P (i.e., the axial distance it takes on thread to make one complete revolution about the tip 82) of approximately 1.0 mm to approximately 2.5 mm, e.g., approximately 1.5 mm to approximately 2.0 mm. The tip 82 may be threaded along its entirety or be only partially threaded along a portion of its height H and/or circumference.

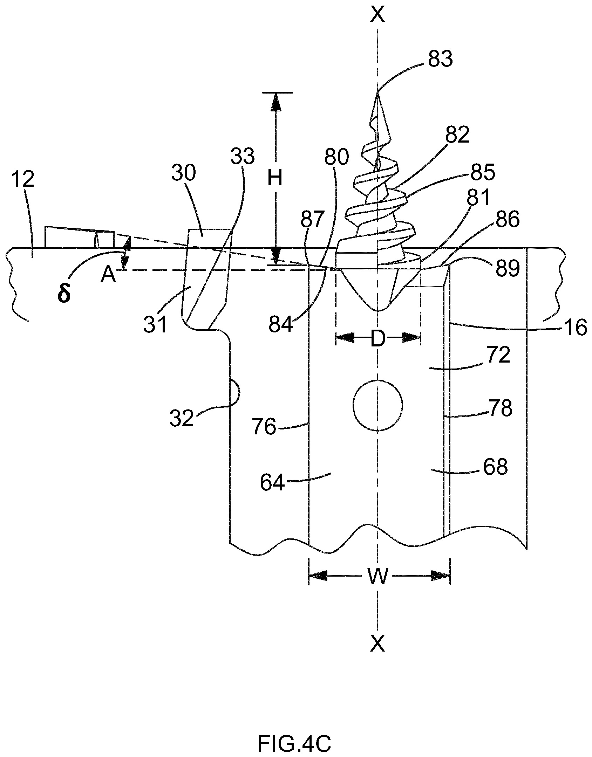

Extending along the top edge 80 and radially outward from the base 81 of the tip 82 are diametrically opposed first and second cutting edges 84, 86. The cutting edges 84, 86 intersect side edges 76, 78 at cutting points 87, 89. The cutting edges 84, 86 may be inclined at an angle δ to a line A that is generally perpendicular to the center axis X. In one embodiment, angle δ may be positive angle (as shown in FIG. 4C) so that the cutting points 87, 89 project axially forward of the base 81 of the tip 82. In other embodiments the angle δ may be negative so that the cutting points 87, 89 are recessed axially behind the base 81 of the tip 82, or may be zero so that the cutting points 87, 89 are even with the base 81 of the tip 82.

Referring to FIG. 4C, the pilot bit 16 is axially positioned relative to the holesaw 12 so that the pointed tip 83 and a majority of the threaded portion 85 of the tip 82 extends axially forward of the cutting inserts 30, while the base 81 of the tip 82 and the cutting edges 84, 86 are positioned axially behind the cutting inserts 30. In this way, the threaded tip 82 enters the workpiece first, followed by the cutting inserts 30 of the holesaw 12, followed by the cutting edges 84, 86 of the pilot bit 16. The threads 85 on the tip 82 relative to the holesaw enables the holesaw assembly 10 to be used with the user having to place no or minimal axial bias along the center axis X on the power tool to which the holesaw assembly 10, 110 is coupled, and also dramatically increases cordless runtime, as discussed further below.

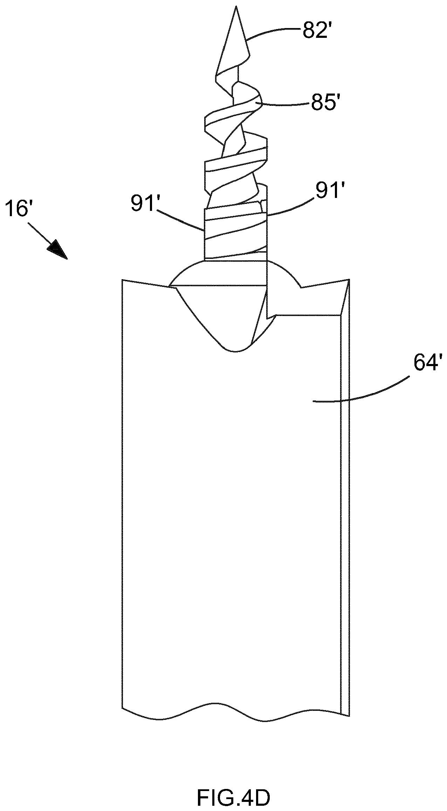

Referring to FIG. 4D, in an alternate embodiment, a pilot bit 16', in the form of a spade bit, includes a shank, an intermediate shaft, and a cutting head 64' similar to those in the pilot bit 16 described above. Extending axially forward of a top edge 80' of the cutting head 64' is an at least partially threaded tip 82' that has been modified as compared to the tip 82 in the pilot bit 16. The modified partially threaded tip 82' has portions of its conical surface ground to form flats 91' that interrupt threads 85'. In other embodiments, the flats may be ground at an angle relative to the center axis X. It is believed that creating these flats 91' reduces the resistance of entry of the tip 82' into a workpiece, which may further increase cordless runtime, as discussed below.

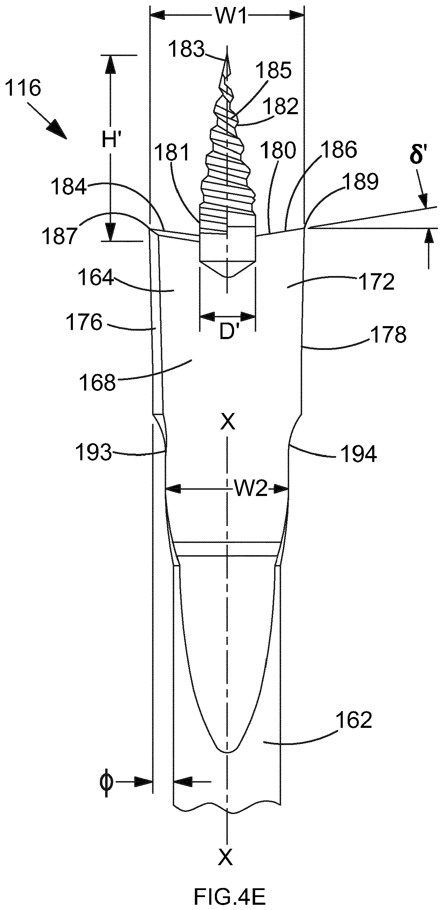

Referring to FIGS. 4E-4G, in another alternate embodiment, a holesaw assembly 110 includes an alternate embodiment of a pilot bit 116 for use with the holesaw 12 and the arbor 14 described above. The pilot bit 116 includes a shank (not shown), an intermediate shaft 162, and a cutting head 164 extending along the center axis X. The shank is receivable in the central opening of the holesaw 12 and is removably mountable in the central bore in the arbor, as described and shown above. The intermediate shaft 162 is generally cylindrical. The cutting head 164 includes a plate-like body 168 having opposed side faces 172, 174 bounded by opposed radial faces 176, 178 and by a top edge 180. The plate like body 168 may have a first width W1 of approximately 7 mm to approximately 13 mm (e.g., approximately 9.5 mm).

Extending axially forward of the top edge 180 along the center axis X is an at least partially threaded tip 182. The tip 182 may have a generally conical, frustroconical, or parabolic shape extending from a wide base 181 to a narrower or pointed tip 183. The tip 182 may have a diameter D' at its base 181 of approximately 3 mm to approximately 8 mm, and a height H' of approximately 6 mm to approximately 20 mm. One or more threads 185 wrap around the tip in the rotational direction. The threads 185 on the tip 182 may have a thread pitch (i.e., the axial distance it takes on thread to make one complete revolution about the tip 82) of approximately 1.0 mm to approximately 2.5 mm, e.g., approximately 1.5 mm to approximately 2.0 mm. The tip 182 may be threaded along its entirety or be only partially threaded along a portion of its height H' and/or circumference.

Extending along the top edge 180 and radially outward from the base 181 of the tip 182 are diametrically opposed first and second cutting edges 184, 186. The cutting edges 184, 186 intersect side edges 176, 178 at cutting points 187, 189. The cutting edges 184, 186 may be inclined at an angle δ' to a line A' that is generally perpendicular to the center axis X. In the embodiment depicted, angle δ' is a positive angle so that the cutting points 187, 189 project axially forward of the base 181 of the tip 182. In other embodiments the angle δ may be negative so that the cutting points 187, 189 are recessed axially behind the base 181 of the tip 182, or may be zero so that the cutting points 187, 189 are even with the base 181 of the tip 182.

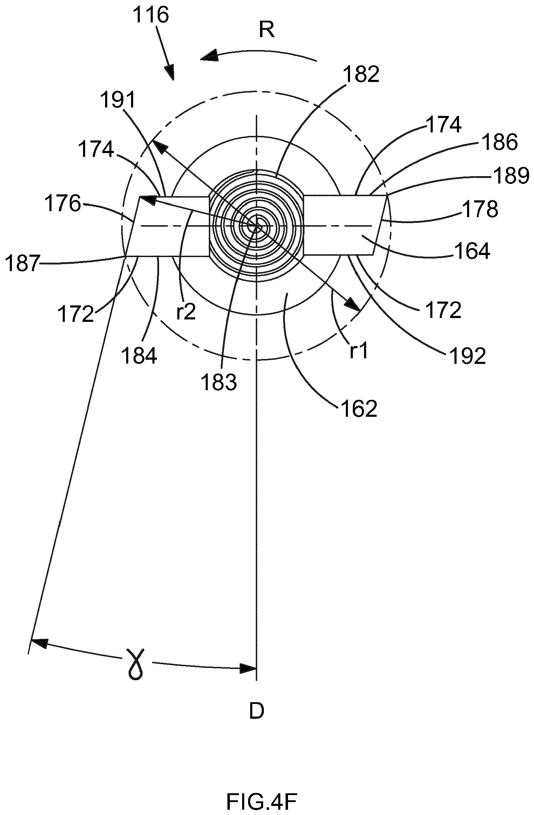

As shown in FIG. 4F, the radial faces 176, 178 are tapered radially inwardly in a circumferential direction from the cutting edges 184, 186 to trailing edges 191, 192 of the body 168 at an angle γ relative to a line D perpendicular to the side faces 172, 174 of the body 168. In this manner, the cutting edges have a first radius r1 that is larger than a second radius r2 of the trailing edges 191, 192. In addition, as shown in FIG. 4E, the radial faces 176, 178 are recessed radially inwardly at cut-out regions 193, 194 formed axially rearward of the cutting tip 182. For example, the cut-out regions 193, 194 may have a second width W2 (e.g., approximately 5 mm to 8 mm) that is less than the first width W1. Finally, the radial faces 176, 178 are tapered radially inwardly in an axial direction rearward of the cutting tip 182 at an angle φ, e.g., approximately 1° to 20°. The combination of the tapering of the radial faces 176 178 in a circumferential direction and an axial direction, and the cut-out regions 193, 194, inhibit the cutting head 164 from binding too tightly in a plug of material formed by the holesaw, which facilitates easier plug removal from the pilot bit 116.

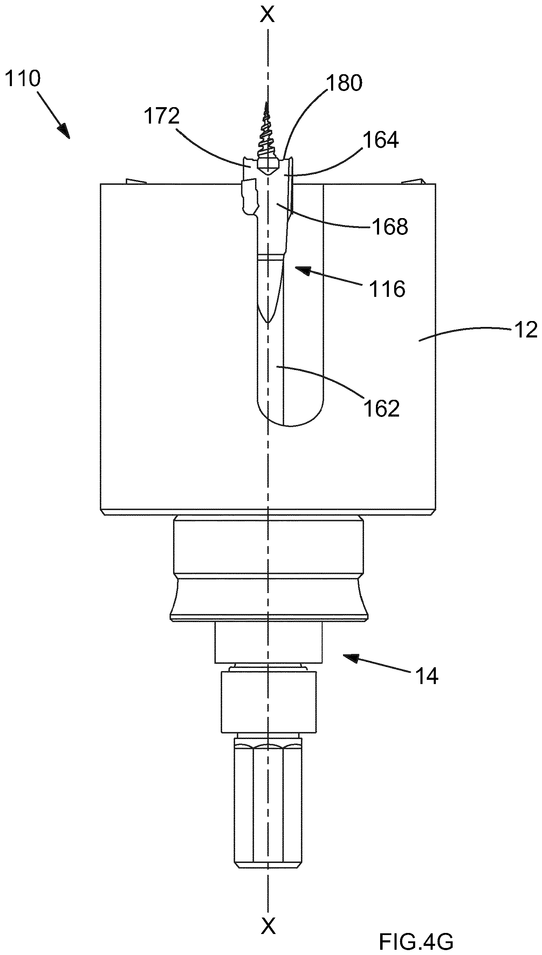

Referring to FIG. 4G, the pilot bit 116 is axially positioned relative to the holesaw 12 so that the entirety of the pointed tip 183, the threaded portion 185 of the tip 182, and the cutting edges 184, 186 extend axially forward of the cutting inserts 130. In this way, the threaded tip 182 enters the workpiece first, followed by the cutting edges 184, 186, followed by the cutting inserts 30 of the holesaw 12. The threads 185 on the tip 182 relative to the holesaw enables the holesaw assembly 110 to be used with the user having to place no or minimal axial bias along the center axis X on the power tool to which the holesaw assembly 110 is coupled, and also dramatically increases cordless runtime, as discussed further below.

In use, the holesaw assembly 10, 110 is assembled by retracting collar 54 of the arbor to its rear position, mounting the holesaw 12 on the arbor 14 by inserting and/or threading the central projection 40 into the central opening 26, and releasing the collar 54 to its forward position to allow the projections 52 to engage the openings 28 in the holesaw 12. Next the set screw 48 is loosened, the pilot bit 16, 16', 116 is inserted through the central opening 26 in the holesaw 12 into the bore 44 in the arbor 14, and the set screw 48 is tightened to firmly hold the pilot bit 16, 16', 116 in the arbor 14. The shank 34 of the arbor is coupled to a tool holder of a rotary power tool, such as a drill. The tip 82, 82', 182 is placed against the workpiece and the drill is actuated. The threaded tip 82, 82', 182 enters the workpiece first, drawing the holesaw assembly 10 into the workpiece, followed by the cutting edges 84, 86, 184, 186 of the pilot bit 16, 16', 116 and the cutting inserts 30 of the holesaw 18. The cutting inserts 30 makes a circular cut to form a substantially circular hole and remove a solid, substantially cylindrical plug of material from the workpiece.

The holesaw assembly 10, including the configuration of the holesaw 12 and the pilot bits 16, 16', 116 have been optimized for use with a cordless power tool in order to maximize power tool runtime (i.e., the number of holes that can be drilled per battery charge), while maintaining adequate speed and quality of hole formation. In certain embodiments, it has been discovered that power tool runtime can be substantially increased (even more than expected) by using a holesaw assembly having the following combination of features: a hook angle α of the cutting inserts 30 between approximately -10° and approximately +10°; a width W of the paddle 64 of the pilot bit 16 between approximately 7 mm and approximately 13 mm, and a thread pitch P of the threads 85 on the tip 82 of between approximately 1.0 mm and approximately 2.5 mm.

As shown in the below table, in an experiment, several prototype designs of 6.5 centimeter holesaws having different carbide cutting insert hook angles and pilot bits having tips with different thread pitch were compared to the Milwaukee^{®} 49-56-9010 6.5 centimeter Big Hawg^{®} Hole Cutter. The experiments were performed using a DEWALT 60V MAX^{∗} cordless right angle drill and making holes in 5 centimeter thick SPF board, with no axial bias applied to the tool.

| **Sample** | **Carbide Insert Hook Angle** | **Spade Width** | **Tip Thread Pitch** | **Average Holes Per Charge** | **Improvement vs. Milwaukee^{®}** |
|---|---|---|---|---|---|
| Milwaukee^{®} 49-56-9010 | 0° | 9.52 mm | None | 40.0 | N/A |
| Prototype 1 | 0° | 7.94 mm | 2.0 mm | 78.6 | 96% |
| Prototype 2 | 0° | 7.94 mm | 1.5 mm^{∗} | 82.7 | 107% |
| Prototype 3 | -5° | 7.94 mm | 2.0 mm | 96.9 | 142% |
| Prototype 4 | -5° | 7.94 mm | 1.5 mm^{∗} | 104.9 | 162% |
| Prototype 5 | +5° | 7.94 mm | 2.0 mm | 80.4 | 101% |
| Prototype 6 | +5° | 7.94 mm | 1.5 mm^{∗} | 85.7 | 114% |

| | | | | | |
|---|---|---|---|---|---|
| ^{∗} Tip modified to have flats (as in Fig. 4D) | | | | | |

In each of the designs according to the present invention, the number of holes per charge unexpectedly and greatly exceeded the number of holes per charge achievable without the pilot bit with the at least partially threaded tip, e.g., by approximately 96% to approximately 162%. In addition, the inventors expected the holesaw with the more aggressive (higher) thread pitch and the more aggressive (positive) hook angle to cut faster and, therefore, to have a greater number of holes per charge. However, contrary to expectations, in this experiment, the greatest improvement was discovered with a holesaw having a negative hook angle (e.g., negative 5°) and a less aggressive (smaller) thread pitch (e.g., 1.5 mm). Moreover, it was discovered that the threaded tip that has been modified to have flats has even greater improvement.

In addition, the designs of the present invention also have markedly, and unexpectedly, increased drill speed (which correlates with increased cordless efficiency and runtime) as compared with existing bi-metal holesaws. For example, three diameters of holesaw assemblies having a holesaw constructed in accordance with the embodiment of FIGS. 3C and 3E and a pilot bit constructed in accordance with the embodiment of FIGS. 4E-4G were compared to similar diameters of DEWALT D180041 bi-metal holesaws with a ¼" twist drill pilot bit. The experiments were performed using a DEWALT 60V MAX^{∗} cordless right angle drill, making holes in 5 centimeter thick SPF board, with 15 pounds of axial bias applied to the tool. In the below table, cutting speed refers to the average number of seconds needed to form a single hole, with a lower number indicating a faster cutting speed.

| **Diameter** | **Avg. Cutting Speed D180041 Bi-Metal Holesaw (sec)** | **Avg. Cutting Speed Holesaw of Present Application (sec)** | **Improvement** |
|---|---|---|---|
| 2-9/16" | 47.9 | 11.7 | 76% |
| 1-3/8" | 36.1 | 2.4 | 93% |
| 4-1/4" | 134.0 | 40.0 | 70% |

In each of the designs according to the present invention, the cutting speed (and thus the expected efficiency and number of holes per charge) greatly exceeded the cutting speed of a comparably sized bi-metal holesaw, e.g., by approximately 70% to approximately 93%.

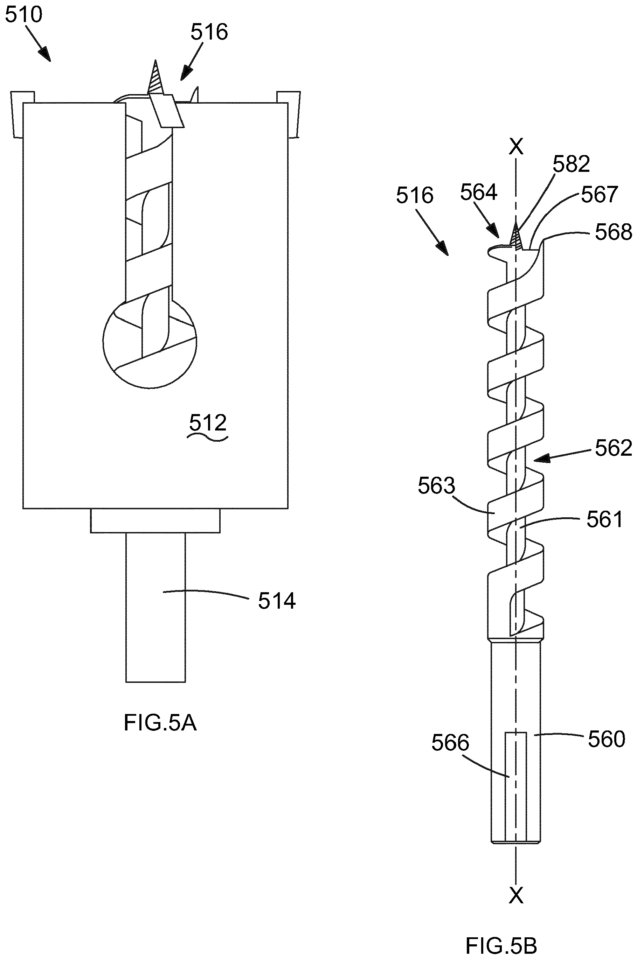

Referring to FIGS. 5A and 5B, in another embodiment, a holesaw assembly 510 includes a holesaw 512 similar to the holesaw 12 described above, an arbor 514 similar to the arbor 14 described above, and an auger bit 516 with an at least partially threaded tip 582. The auger bit 516 includes a shank 560, an intermediate shaft 562, and a cutting head 564 extending along a center axis X. The shank 560 is generally cylindrical with one or more flats 566. The shank 560 is receivable in a central opening of the holesaw 512 and is removably mountable in a central bore in the arbor 514. The intermediate shaft 562 includes a generally cylindrical core 561 and one or more helical threads 563. The cutting head 564 includes a pair of radially extending cutting edges 567 (one of which is shown) generally perpendicular to the center axis X terminating in a pair of axially forwardly projecting cutting teeth 568 (one of which is shown) extending forward of the cutting edges 567 as an extension of the threads 563. The cutting head 564 has the same outer diameter as the helical threads 563. Extending axially forward of the cutting head 564 along the center axis X is the least partially threaded tip 582, which may be similar to one of the tips 82 and 82' described above.

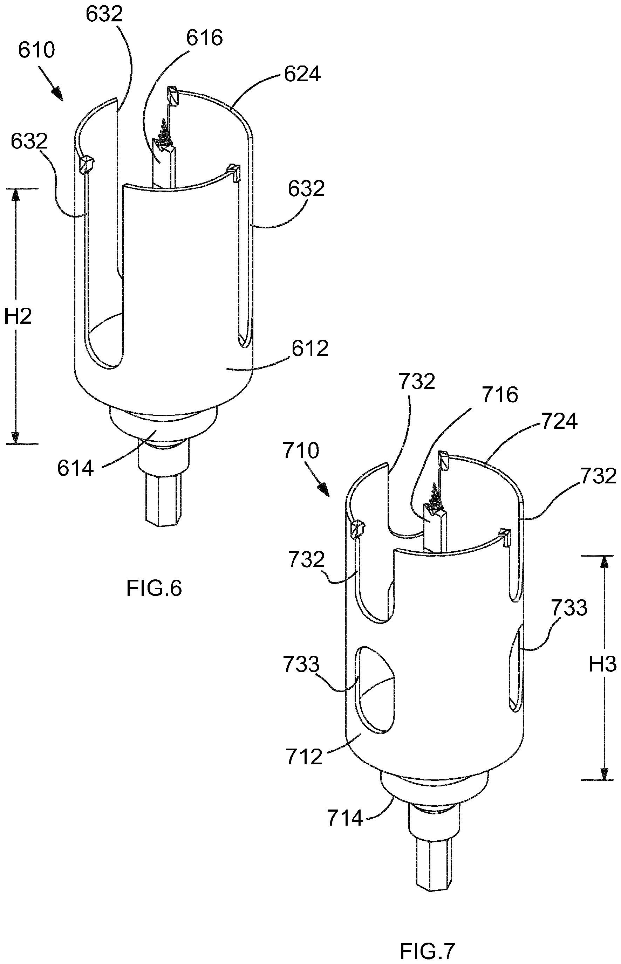

FIGS. 6 and 7 illustrate two alternative embodiments of holesaw assemblies 610 and 710. The holesaw assemblies each include a holesaw 612, 712, an arbor 614, 714, and a pilot bit 616, 716, similar to the holesaw 12, arbor 14, and pilot bit 16 of the holesaw assembly 10 described above. The holesaw assemblies 610, 710 differ from the holesaw assembly 10 insofar as the holesaws 612, 712 have a height H2, H3 that is approximately twice a height H1 of the holesaw 12. This enables the holesaws 612, 712 to be used to form holes in materials that are approximately twice as thick. For example, the holesaw 12 may be sized to form holes in a 2" thick piece of material, while the holesaws 612, 712 may be sized to form holes in 4" thick piece of material. In addition, the holesaw 612 has a plurality of elongated slots 632 open to a peripheral edge 624 and that extend over a majority of the height H2 of the holesaw 612 to facilitate removal of a plug of waste material from the holesaw 612. The holesaw 712 has a plurality of open elongated slots 732 that are open to a peripheral edge 724 of the holesaw 712, and plurality of fully enclosed elongated slots 733 axially aligned with and behind the open slots 732. Each of the slots 732, 733 extends over less than half the height H3 of the holesaw 712 and facilitate removal of a plug of waste material from the holesaw 712.

Terns of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

Numerous modifications may be made to the exemplary implementations described above within the scope of the appended claims.

## Claims

1. A holesaw assembly (10, 110, 610, 710) comprising:
a holesaw comprising a hollow cup (18) defining a center axis, the cup having a round base (20) perpendicular to the center axis and a peripheral wall (22) coupled to and extending axially forward of the base to a peripheral edge (24, 624, 724) at a free end of the wall;
one or more hard metal cutting inserts (30) disposed on the peripheral edge, wherein each cutting insert includes a polygonal body (31) having a cutting edge (33), a rake face (37) extending generally axially downward from the cutting edge and disposed at a hook angle relative to a line parallel to the center axis, the hook angle being between approximately negative 10° and approximately positive 10°, a top relief face (35) extending rotationally rearward of the cutting edge, an outer side face (31A) and an inner side face (31B) each extending generally downward from the relief face, and wherein the outer side face intersects the relief face at an outer top edge (39A) and the inner side face intersects the relief face at an inner top edge (39B),
a pilot bit (16, 116, 616, 716) received in the holesaw along the center axis, the pilot bit having a shaft (62, 162, 562)) received in the base (20), a cutting head (64, 164, 564) coupled to a front end of the shaft, and an at least partially threaded tip (82, 82', 182, 582) coupled to a front end of the cutting head (64, 164, 564),
wherein the holesaw is free of any radial cutting elements disposed inside the cup (18) between the pilot bit (16, 116, 616, 716) and the peripheral wall (22) of the cup,
**characterised in that** the outer side surface (31A) is angled radially outward in an axially forward direction F by an outer offset angle θA so that the outer top edge (39A) is offset in a radially outward direction RO from the peripheral edge (24) by an outer offset distance Da, and the inner side surface (31B) is angled radially inward in an axially forward direction F by an inner offset angle θB so that the inner top edge (39B) is offset in a radially inward direction RI from the peripheral edge (24)
by an inner offset distance Db, and wherein the inner offset distance Db and the inner offset angle θB are greater than the outer offset distance Da and the outer offset angle θA;
wherein the top relief face (35) is beveled axially downward in a radially inward direction RI from the outer top edge (39A) to the inner top edge (39B) at a bevel angle β relative to a horizontal H; and
wherein the outer side surface (31A) and the inner side surface (31B) taper inwardly toward each other from the rake face (37) toward a trailing face (41) by angles ωA and ωB, respectively, relative to respective lines Ya and Yb perpendicular to the cutting edge (33)

2. The holesaw assembly of claim 1, wherein the outer taper angle ωA is greater than the inner taper angle ωB.

3. The holesaw assembly of any previous claim, wherein the pilot bit (16) comprises a spade bit with the at least partially threaded tip (82).

4. The holesaw assembly of claim 3, wherein the cutting head comprises:
a plate-like body (68, 168) with first and second side faces (72, 74) bounded by opposed side edges (76, 78) and by a top edge (80); and
diametrically opposed first and second cutting edges (84, 86, 184, 186) extending along the top edge and radially outward from a base (81) of the tip (82).

5. The holesaw assembly of claim 4, wherein the plate like body (68, 168) has a width of approximately 7 mm to approximately 13 mm.

6. The holesaw assembly of claim 5, wherein the plate like body (168) includes radial faces (176, 178) connecting radially outward edges of the first and second side faces (172, 174), each of the radial faces tapering radially inwardly in a circumferential direction from the respective first or second cutting edge (84, 86, 184, 186) to a trailing edge (191, 192).

7. The holesaw assembly of claim 6, wherein the radial faces (176, 178) taper radially inwardly to cut out regions in an axially rearward direction from the at least partially threaded tip (182).

8. The holesaw assembly of claim 1 or 2, wherein the pilot bit comprises an auger bit (516) with the at least partially threaded tip (582).

9. The holesaw assembly of claim 8, wherein the cutting head (564) comprises a pair of diametrically opposed radially extending cutting edges (567) terminating in a peripheral tooth (568), and the shaft comprises a shank portion (560) received in the holesaw and a fluted intermediate shaft (562) having at least one spiral flute extending from the cutting head to the shank, the fluted intermediate shaft and the cutting head having substantially the same outer diameter.

10. The holesaw assembly of any preceding claim, wherein the at least partially threaded tip (82, 82', 182, 582) has a conical shape with a thread.

11. The holesaw assembly of claim 10, wherein a portion of the at least partially threaded tip (82') includes at least one flat surface (91').

12. The holesaw assembly of any preceding claim, wherein the holesaw is configured to form and remove a generally cylindrical plug of material from a workpiece.

## Patentansprüche

1. Lochsägenbaugruppe (10, 110, 610, 710), umfassend:
eine Lochsäge, umfassend eine Hohlmanschette (18), die eine Mittelachse definiert, wobei die Manschette einen runden Sockel (20) aufweist, der senkrecht zur Mittelachse verläuft, und eine periphere Wand (22), die an den Sockel gekoppelt ist und sich von diesem axial nach vorne bis zu einer peripheren Kante (24, 624, 724) an einem freien Ende der Wand erstreckt;
einen oder mehrere Schneideinsätze (30) aus Hartmetall, die an der peripheren Kante angeordnet sind, wobei jeder Schneideinsatz einen polygonalen Körper (31) beinhaltet, der eine Schneidkante (33), einen Spanwinkel (37), der sich im Allgemeinen axial nach unten von der Schneidkante erstreckt und an einem Radialwinkel relativ zu einer Linie, die parallel zur Mittelachse verläuft, angeordnet ist, wobei der Radialwinkel zwischen ungefähr negativ 10° und ungefähr positiv 10° beträgt, eine Außenseitenfläche (31A) und eine Innenseitenfläche (31B), die sich jeweils im Allgemeinen nach unten von der Freifläche erstrecken und wobei die Außenseitenfläche die Freifläche an einer äußeren Oberkante (39A) schneidet und die Innenseitenfläche die Freifläche an einer inneren Oberkante (39B) schneidet,
einen Pilotbohreinsatz (16, 116, 616, 716), der in der Lochsäge entlang der Mittelachse aufgenommen ist, wobei der Pilotbohreinsatz einen Schaft (62, 162, 562) aufweist, der in dem Sockel (20) aufgenommen ist, einen Schneidkopf (64, 164, 564), der an ein vorderes Ende des Schafts gekoppelt ist, und eine Spitze (82, 82', 182, 582), die zumindest teilweise mit einem Gewinde versehen ist, die an ein vorderes Ende des Schneidkopfes (64,164, 564) gekoppelt ist,
wobei die Lochsäge frei von radialen Schneidelementen ist, die im Inneren der Manschette (18) zwischen dem Pilotbohreinsatz (16,116, 616, 716) und der peripheren Wand (22) der Manschette angeordnet sind,
**dadurch gekennzeichnet, dass** die Außenseitenfläche (31A) radial nach außen in einer axialen Vorwärtsrichtung F um einen äußeren Versatzwinkel 0A derart abgewinkelt ist, sodass die äußere Oberkante (39A) in einer Richtung RO radial nach außen von der peripheren Kante (24) um eine äußere Versatzdistanz Da versetzt ist und die Innenseitenfläche (31B) radial nach innen in einer axialen Vorwärtsrichtung F um einen inneren Versatzwinkel 0B derart abgewinkelt ist, sodass die innere Oberkante (39B) in einer Richtung RI radial nach innen von der peripheren Kante (24) abgewinkelt ist und wobei die innere Versatzdistanz Db und der innere Versatzwinkel 0B größer sind als die äußere Versatzdistanz Da und der äußere Versatzwinkel θA;
wobei die obere Freifläche (35) axial nach unten in einer Richtung RI radial nach innen von der äußeren Oberkante (39A) bis zu einer inneren Oberkante (39B) in einem Anschrägwinkel β relativ zu einer Horizontale H angeschrägt ist; und
wobei die Außenseitenfläche (31A) und die Innenseitenfläche (31B) nach innen von dem Spanwinkel (37) bis zu einer Abfallfläche (41) um die jeweiligen Winkel ωA und ωB, relativ zu den entsprechenden Linien Ya and Yb senkrecht zur Schneidkante (33), verjüngt sind.

2. Lochsägenbaugruppe nach Anspruch 1, wobei der äußere Verjüngungswinkel ωA größer ist als der innere Verjüngungswinkel ωB.

3. Lochsägenbaugruppe nach einem der vorstehenden Ansprüche, wobei der Pilotbohreinsatz (16) einen Spatenbohreinsatz mit einer Spitze (82), die zumindest teilweise mit einem Gewinde versehen ist.

4. Lochsägenbaugruppe nach Anspruch 3, wobei der Schneidkopf Folgendes umfasst:
einen plattenförmigen Körper (68, 168) mit ersten und zweiten Seitenflächen (72, 74), die durch entgegengesetzten Seitenkanten (76, 78) und durch eine Oberkante (80) begrenzt sind; und diametral entgegengesetzten ersten und zweiten Schneidkanten (84, 86, 184, 186), die sich entlang der Oberkante und radial nach außen von einem Sockel (81) der Spitze (82) erstrecken.

5. Lochsägenbaugruppe nach Anspruch 4, wobei der plattenförmige Körper (68, 168) eine Breite von ungefähr 7 mm bis ungefähr 13 mm aufweist.

6. Lochsägenbaugruppe nach Anspruch 5, wobei der plattenförmige Körper (168) radiale Flächen (176, 178) beinhaltet, die radial nach außen liegende Kanten der ersten und zweiten Seitenflächen (172, 174) verbinden, wobei jede der radialen Flächen in einer Umfangsrichtung von der entsprechenden ersten oder zweiten Schneidkante (84, 86, 184, 186) bis zu einer Hinterkante (191, 192) radial nach innen verjüngt ist.

7. Lochsägenbaugruppe nach Anspruch 6, wobei die radialen Flächen (176, 178) bis zu Ausschnittbereichen in einer axial rückwärtigen Richtung von der Spitze (182), die zumindest teilweise mit einem Gewinde versehen ist, radial nach innen verjüngt sind.

8. Lochsägenbaugruppe nach Anspruch 1 oder 2, wobei der Pilotbohreinsatz einen Schneckenbohreinsatz (516) mit der Spitze (582), die zumindest teilweise mit einem Gewinde versehen ist, umfasst.

9. Lochsägenbaugruppe nach Anspruch 8, wobei der Schneidkopf (564) ein Paar von diametral entgegengesetzten, sich radial erstreckenden Schneidkanten (567) umfasst, die in einer peripheren Verzahnung (568) enden, und der Schaft einen Schenkelteil (560) umfasst, der in der Lochsäge aufgenommen ist, und einen ausgekehlten Zwischenschaft (562), der mindestens eine Spiralausflutung aufweist, die sich vom Schneidkopf bis zum Schenkel erstreckt, wobei der ausgekehlte Zwischenschaft und der Schneidkopf im Wesentlichen denselben Außendurchmesser aufweisen.

10. Lochsägenbaugruppe nach einem der vorstehenden Ansprüche, wobei die Spitze (82, 82', 182, 582), die zumindest teilweise mit einem Gewinde versehen ist, eine konische Form mit einem Gewinde aufweist.

11. Lochsägenbaugruppe nach Anspruch 10, wobei ein Teil der Spitze (82'), die zumindest teilweise mit einem Gewinde versehen ist, mindestens eine flache Fläche (91') beinhaltet.

12. Lochsägenbaugruppe nach einem der vorstehenden Ansprüche, wobei die Lochsäge konfiguriert ist, einen im Allgemeinen zylindrischen Materialpropfen aus einem Werkstück zu formen und zu entfernen.

## Revendications

1. Ensemble scie-cloche (10, 110, 610, 710) comprenant :
une scie-cloche comprenant une coupelle creuse (18) définissant un axe central, la coupelle présentant une base ronde (20) perpendiculaire à l'axe central et une paroi périphérique (22) accouplée à la base et s'étendant axialement vers l'avant de celle-ci jusqu'à une arête périphérique (24, 624, 724) au niveau d'une extrémité libre de la paroi ;
un ou plusieurs inserts de coupe en métal dur (30) disposés sur l'arête périphérique, dans lequel chaque insert de coupe inclut un corps polygonal (31) présentant une arête de coupe (33), une face chevillée (37) s'étendant de manière globalement axiale vers le bas depuis l'arête de coupe et disposée à un angle d'attaque relatif à une ligne parallèle à l'axe central, l'angle d'attaque étant entre approximativement moins 10° et approximativement plus 10°, une face de relief supérieure (35) s'étendant de manière rotative vers l'arrière de l'arête de coupe, une face latérale extérieure (31A) et une face latérale intérieure (31B) s'étendant chacune globalement vers le bas depuis la face de relief, et dans lequel la face latérale extérieure coupe la face de relief au niveau d'une arête supérieure extérieure (39A) et la face latérale intérieure croise la face de relief au niveau d'une arête supérieure intérieure (39B),
un foret pilote (16, 116, 616, 716) reçu dans la scie-cloche le long de l'axe central, le foret pilote présentant un arbre (62, 162, 562) reçu dans la base (20), une tête de coupe (64, 164, 564) couplée à une extrémité avant de l'arbre, et une pointe au moins partiellement filetée (82, 82', 182, 582) couplée à une extrémité avant de la tête de coupe (64, 164, 564),
dans lequel la scie-cloche est dépourvue de tout élément de coupe radial disposé à l'intérieur de la coupelle (18) entre le foret pilote (16, 116, 616, 716) et la paroi périphérique (22) de la coupelle,
**caractérisé en ce que** la surface latérale extérieure (31A) est inclinée radialement vers l'extérieur dans une direction axialement vers l'avant F d'un angle de décalage extérieur 0A de telle sorte que l'arête supérieure extérieure (39A) est décalée dans une direction radialement vers l'extérieur RO depuis l'arête périphérique (24) d'une distance de décalage extérieur Da, et la surface latérale intérieure (31B) est inclinée radialement vers l'intérieur dans une direction axialement vers l'avant F d'un angle de décalage intérieur 0B de telle sorte que l'arête supérieure intérieure (39B) est décalée dans une direction radialement vers l'intérieur RI depuis l'arête périphérique (24) d'une distance de décalage intérieur Db, et dans lequel la distance de décalage intérieur Db et l'angle de décalage intérieur 0B sont supérieurs à la distance de décalage extérieur Da et à l'angle de décalage extérieur θA ;
dans lequel la face de relief supérieure (35) est biseautée axialement vers le bas dans une direction radialement vers l'intérieur RI depuis l'arête supérieure extérieure (39A) jusqu'à l'arête supérieure intérieure (39B) à un angle de biseau β relatif à une horizontale H ; et
dans lequel la surface latérale extérieure (31A) et la surface latérale intérieure (31B) se resserrent vers l'intérieur l'une vers l'autre depuis la face chevillée (37) vers une face de fuite (41) selon des angles ωA et ωB, respectivement, par rapport à des lignes Ya et Yb respectives perpendiculaires à l'arête de coupe (33).

2. Ensemble scie-cloche selon la revendication 1, dans lequel l'angle de resserrement extérieur ωA est supérieur à l'angle de resserrement intérieur ωB.

3. Ensemble scie-cloche selon une quelconque revendication précédente, dans lequel le foret pilote (16) comprend un trépan avec la pointe au moins partiellement filetée (82).

4. Ensemble scie-cloche selon la revendication 3, dans lequel la tête de coupe comprend :
un corps en forme de plaque (68, 168) avec des première et seconde faces latérales (72, 74) délimitées par des arêtes latérales opposées (76, 78) et par une arête supérieure (80) ; et des première et seconde arêtes de coupe diamétralement opposées (84, 86, 184, 186) s'étendant le long de l'arête supérieure et radialement vers l'extérieur depuis une base (81) de la pointe (82).

5. Ensemble scie-cloche selon la revendication 4, dans lequel le corps en forme de plaque (68, 168) présente une largeur d'approximativement 7 mm à approximativement 13 mm.

6. Ensemble scie-cloche selon la revendication 5, dans lequel le corps en forme de plaque (168) inclut des faces radiales (176,178) reliant des arêtes radialement vers l'extérieur des première et seconde faces latérales (172, 174), chacune des faces radiales se resserrant radialement vers l'intérieur dans une direction circonférentielle depuis la première ou seconde arête de coupe (84, 86, 184, 186) respective jusqu'à une arête de fuite (191, 192).

7. Ensemble scie-cloche selon la revendication 6, dans lequel les faces radiales (176, 178) se resserrent radialement vers l'intérieur pour couper des régions dans une direction axialement vers l'arrière depuis la pointe au moins partiellement filetée (182).

8. Ensemble scie-cloche selon la revendication 1 ou 2, dans lequel le foret pilote comprend une mèche tarière (516) avec la pointe au moins partiellement filetée (582).

9. Ensemble scie-cloche selon la revendication 8, dans lequel la tête de coupe (564) comprend une paire d'arêtes de coupe diamétralement opposées s'étendant radialement (567) se terminant dans une dent périphérique (568), et l'arbre comprend une partie tige (560) reçue dans la scie-cloche et un arbre intermédiaire cannelé (562) présentant au moins une cannelure en spirale s'étendant depuis la tête de coupe jusqu'à la tige, l'arbre intermédiaire cannelé et la tête de coupe présentant sensiblement le même diamètre extérieur.

10. Ensemble scie-cloche selon une quelconque revendication, dans lequel la pointe au moins partiellement filetée (82, 82', 182, 582) présente une forme conique avec un filet.

11. Ensemble scie-cloche selon la revendication 10, dans lequel une partie de la pointe au moins partiellement filetée (82') inclut au moins une surface plate (91').

12. Ensemble scie-cloche selon une quelconque revendication précédente, dans lequel la scie-cloche est configurée pour former et retirer un bouchon globalement cylindrique de matériau d'une pièce.
